Europäisches Patentamt

European Patent Office

Office européen des brevets

(11) Publication number: **0 071 674**
**B1**

# EUROPEAN PATENT SPECIFICATION

(45) Date of publication of patent specification: **14.01.87**

(21) Application number: **81303548.2**

(22) Date of filing: **03.08.81**

(51) Int. Cl.⁴: **G 05 G 5/06,** G 05 G 1/04, B 60 K 25/06

(54) PTO lever arrangement for a tractor.

(43) Date of publication of application:
**16.02.83 Bulletin 83/07**

(45) Publication of the grant of the patent:
**14.01.87 Bulletin 87/03**

(84) Designated Contracting States:
**AT DE FR GB IT SE**

(56) References cited:
FR-A-2 314 535
GB-A-1 072 537
GB-A-1 211 263
GB-A-2 046 376
GB-A-2 053 384
US-A-3 985 039
US-A-4 008 626
US-A-4 229 993

(73) Proprietor: **DEERE & COMPANY**
**1 John Deere Road**
**Moline Illinois 61265 (US)**

(72) Inventor: **Schafer, Helmut**
**Am Kraichbach 27**
**D-6834 Ketsch (DE)**
Inventor: **Huckler, Volker**
**Geraer Ring 10**
**D-6800 Mannheim (DE)**
Inventor: **Teich, Michael**
**Meerfeldsstrasse 32**
**D-6800 Mannheim (DE)**

(74) Representative: **Pears, David Ashley et al**
**REDDIE & GROSE 16 Theobalds Road**
**London WC1X 8PL (GB)**

Courier Press, Leamington Spa, England.

## Description

The present invention relates to a PTO (power take off) lever arrangement for atractor, of the type set forth in the introductory part of claim 1. Such an arrangement is known from GB 2 046 376 in which a valve for a PTO is spring biased to disengage but is held by detent balls in its engaged position the bias on the balls being established by the hydraulic line pressure. When the pressure falls too low, the detent is overcome and the spring bias automatically returns the valve to disengaged, so that such hydraulic pressure as is available is reserved for more important functions of the tractor.

A convenient place to mount the PTO lever is through the dashboard of the tractor, preferably to the off-side of the steering wheel. However, in such a position, the lever can be too easily knocked, e.g. as the driver mounts or dismounts and this creates an unacceptable safety risk. The PTO drive could be inadvertently engaged while another operator was working on the PTO implement in the belief that it was safe to do so.

The aforementioned GB 2 046 376 already provides spring-biased detent balls to hold the PTO lever in the disengaged position. However, this provides no positive locking action but merely an initial resistance which the operator has to overcome.

US patent 4 008 626 discloses an arrangement for preventing inadvertent actuation of a control lever when a driver is entering or leaving his cab. A safety bar prevents the driver entering or leaving the cab when the control level is in position for normal use. The safety bar is coupled to the control lever and can only be moved out of the driver's way by putting the control lever in a position in which the mechanism operated by the lever is locked in its disengaged position.

US patent 3 985 039 and US 4 229 993 disclose control levers which are locked in their disengaged positions until the operator disengages the locking mechanism by pressing a button mounted on the lever, or by squeezing two handles together.

GB 1 072 537 discloses a gear change mechanism which prevents reverse gear being selected without the gear lever first being depressed to disengage a projection from a slot. After reverse gear has been selected, the position of the gear lever is maintained by frictional forces. The gear lever must be moved manually to disengage reverse gear, and the mechanism is not suitable for taking advantage of the automatic return feature of the PTO valve. A driver inadvertently depressing the gear lever could engage reverse gear.

British specification No. 2 053 384 discloses a control knob for a PTO, carrying projections which engage recesses in a fixed plate, to prevent the selected speed of the PTO being changed without neutral first being selected. The projections and recesses can be disengaged by lifting the control but they prevent the control returning automatically to its disengaged position, so making the arrangement unsuitable for use with the PTO valve described above.

The object of this invention is to overcome the problem of inadvertent engagement, in a simple and inexpensive way which is, in particular, compatible with the automatic return of the PTO lever to disengaged in the manner described above, when there is loss of hydraulic pressure. The invention is characterised by the features set out in the characterising part of claim 1.

The invention will be described in more detail, by way of example, with reference to the accompanying drawings, in which:

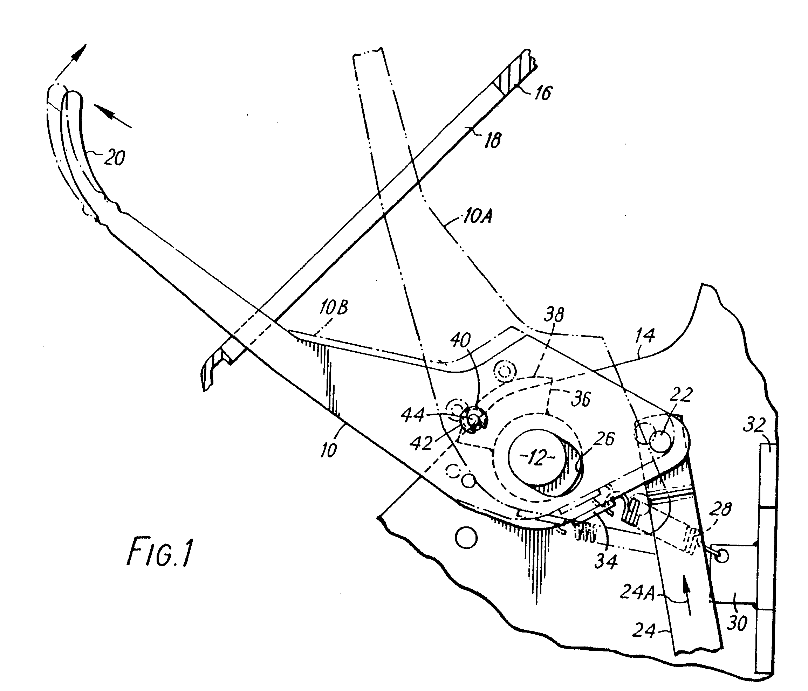

Fig. 1 is a side elevation of a PTO lever arrangement embodying the invention, and

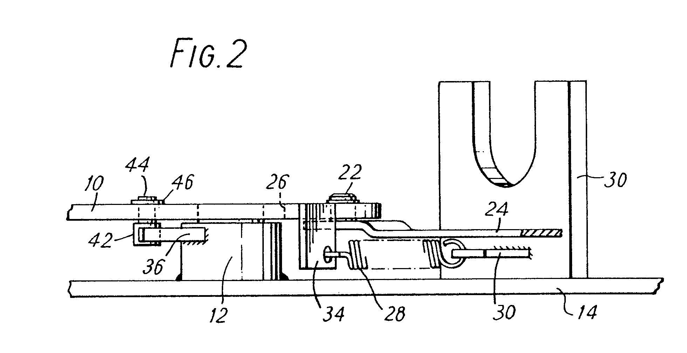

Fig. 2 is a view of the arrangement from below.

The PTO lever 10 is pivoted on a pin 12 to a support plate 14 behind the dashboard 16 of a tractor and projects through a slot 18 in the dashboard. At its outer end the lever has a grip 20 for moving the lever between its disengaged (i.e. PTO disengaged) position shown in full lines and its engaged position shown at 10A in broken lines. At its inner end the lever is pivotally connected by a stud 22 to a link 24 which extends down to the PTO control valve. This valve is not shown because it is known per se but, in essentials it is a spool valve moved against a spring bias to engage the PTO when the lever is raised to position 10A, so pushing the link 24 down. The bias on the valve urges the link up in the direction of an arrow 24A but this is normally prevented by detent balls engaging with the spool and hold engaged by hydraulic line pressure. The valve returns to disengaged when either the driver pulls the lever 10 back down to disengaged, overcoming the detent balls, or the line pressure drops to the point where the detent balls are unable to hold the spool against the bias thereon.

The lever 10 is pivoted on the fixed pivot 12 by means of a slotted hole 26 which allows the lever also to move radially, in and out relative to the dashboard 16. The lever is pulled in by a tension spring 28 stretched between a lug 30 on a bracket 32 attached to the plate 14 and a lug 34 attached to the lever. A sector 36 fixed to the pivot 12 has a circumferential edge 38 concentric with the pivot axis, intempted by a radial slot or notch 40. A roller 42 is journalled on a pin 44 by permanently lubricated, low-friction needle bearings and the pin is retained through the lever 10 by a circlip 46, at a position such that it is pulled into the slot 40 by the spring 28 when the lever is in the disengaged position. The line of action of the spring moreover runs radially through the axis of the pivot 12 and through the centre of the slot 40 so the direct pull of the spring serves to urge the roller into the slot. In this situation, a pure couple on the lever cannot possibly pivot the lever and any force, such as a knock on the lever, giving rise to a couple compounded with an inward push on the lever cannot pivot the lever. Therefore the lever is absolutely secure against accidental movement to the engaged position where there is a risk of a knock, specially in the dashboard to the off-side of the steering wheel.

To pivot the lever to the engaged position 10A it has first to be pulled out, against the spring 28, to the further broken line position 10B before it is swung up to position 10A.

When the lever is in the engaged position 10A it can be seen that the spring 28 pulls the roller against the sector edge 38 and also creates a couple tending to turn the lever back to the disengaged position. This couple is small and, although it assists the bias on the PTO valve it does not overcome the action of the detent balls. If necessary, the supplementary action of the spring 28 can be compensated for by a slight reduction in the strength of the spring biasing the valve itself.

If the hydraulic line pressure falls to the point where the detent balls are overcome, the valve, link 24 and lever 20 return in the normal manner to the disengaged position, because of the low friction of the roller 42 riding on the section edge 38, and the roller snaps back into the slot 40 when the disengaged position is fully reached. This is also the case when the lever is pulled back by hand to disengaged.

## Claims

1. A lever arrangement comprising a manually operable lever (10) adapted to be connected to a PTO valve of the kind having detent means responsive to hydraulic line pressure, the lever (10) being pivotable on a pivot (12) between an engaged position (10A) and a disengaged position to which the lever (10) moves when the line pressure supplied to the associated PTO valve falls below a preset value, characterised in that the lever is, in its disengaged position, biased by a spring (28) to engage a projection (42, 44) into a recess (40) for preventing inadvertent moving out of its disengaged position, one of the projection and the recess being fixed and the other of the projection and the recess moving with the lever and in that the lever (10) is mounted to be radially movable on its pivot (12) by means of a slotted aperture (26) so that the lever is pivotable to its engaged position (10A) only after having been radially pulled on its pivot (12) against the spring bias so as to disengage the projection (42, 44) from the recess (40); the line of action of said spring (28) being such that:

(a) the lever (10) is held in its engaged position (10A) by a force, exerted by the detent means responsive to the line pressure of the PTO valve, counteracting the action of the spring (28), and

(b) the lever (10) returns automatically to its disengaged position, under the action of the spring (28), when the force exerted by the detent means of the PTO valve is released.

2. A lever arrangement according to claim 1, characterised in that the spring is a tension spring (28) whose line of action is substantially radial when the lever (10) is in its disengaged position but which moves to apply a couple to the lever (10) when the lever is in its engaged position, tending to return the lever to its disengaged position.

3. A lever arrangement according to claim 1 or 2, characterised in that the recess is a slot (40) in a sector (36) with an arcuate edge (48) concentric with the pivotal axis of the lever (10) and on which the projection (42, 44) rides as the lever is pivoted between its two positions.

4. A lever arrangement according to claim 3, characterised in that the projection comprises a roller (42) providing negligible frictional restraint to the pivotal movement of the lever (10).

5. A lever arrangement according to claim 4, characterised in that the sector (36) is fixed relative to the pivot (12) while the roller (42) is on a pin (44) fixed to the lever (10).

6. A lever arrangement according to any of claims 1 to 5, characterised in that the lever is mounted to project through the dashboard (16) of the tractor and the spring (28) pulls the lever inwardly of the dashboard.

## Patentansprüche

1. Hebelanordnung, welche einen manuell betätigbaren Helbe (10) umfaßt, der zur Verbindung mit einem Zapfwellen-Ventil von der Art angepaßt ist, daß Feststell mittel aufweist, die auf den hydraulischen Leitungsdruck ansprechen, bei der der Hebel (10) auf einem Drehpunkt (12) zwischen einer Einrückstellung (10A) und einer Ausrückstellung schwenkbar ist, zu der sich der Hebel (10) bewegt, wenn der Leitungsdruck, der dem zugehörigen Zapfwellen-Ventil zugeleitet wird, unter einen vorgegebenen Wert absinkt, dadurch gekennzeichnet, daß der Hebel in seiner Ausrückstellung durch eine Feder (28) vorgespannt ist, um einen Vorsprung (42, 44) in eine Ausnehmung (40) eingreifen zu lassen und um eine unbeabsichtigte Bewegung aus der Ausrückstellung zu verhindern, wobei einer der beiden Teile, Vorsprung und Ausnehmung, fixiert ist und der andere sich mit dem Hebel mitbewegt und daß der Hebel so montiert ist, daß er radial auf seinem Drehpunkt (12) mittels einer geschlitzten Öffnung (26) bewegbar ist, derart, daß der Hebel in seiner Einrückstellung (10A) nur schwenkbar ist, nachdem er auf seinem Schwenkpunkt (12) gegen die Federvorspannung radial gezogen worden ist, so daß der Vorsprung (42, 44) von der Ausnehmung (40) freikommt, wobei die Wirklinie der genannten feder (28) derart ist, daß

(a) der Hebel (10) in seiner Einrückstellung (10a) durch eine Kraft gehalten ist, die durch die Feststellmittel abhängig von dem Leitungsdruck des Zapfwellen-Ventils ausgeübt wird, und der Wirkung der Feder (28) entgegenwirkt, und

(b) der Hebel (10) automatisch in seine Ausrückstellung unter der Wirkung der Feder (28) zurückkehrt, wenn die durch die Feststellmittel des Zapfwellen-Ventils ausgeübte Kraft gelöst wird.

2. Hebelanordnung nach Anspruch 1, dadurch gekennzeichnet, daß die Feder eine Spannfeder (28) ist, deren Wirklinie im wesentlichen radial verläuft, wenn der Hebel (10) sich in der Ausrückstellung befindet, die sich jedoch bewegt, um an dem Hebel (10) ein Kräftepaar anzulegen, wenn der Hebel sich in seiner Einrückstellung befindet, mit der Neigung, den Hebel in die Ausrückstellung zurückzubringen.

3. Hebelanordnung nach Anspruch 1 oder 2, dadurch gekennzeichnet, daß die Ausnehmung ein Schlitz (40) in einem Sektor (36) mit einer gekrümmten Kante (38) ist, die konzentrisch zu der Schwenkachse des Hebels (10) verläuft und auf der der Vorsprung (42, 44) aufgleitet, wenn der Hebel zwischen seinen beiden Stellungen verschwenkt wird.

4. Hebelanordnung nach Anspruch 3, dadurch gekennzeichnet, daß der Vorsprung eine Rolle (42) umfaßt, welche eine nur vernachlässigbare Reibungsbehinderung der Schwenkbewegung des Hebels (10) liefert.

5. Hebelanordnung nach Anspruch 4, dadurch gekennzeichnet, daß der Sektor (36) gegenüber dem Schwenkpunkt (12) fixiert ist, während die Rolle (42) auf einem Stift (44) angeordnet ist, der an dem Hebel (10) befestigt ist.

6. Hebelanordnung nach irgendeinem der Ansprüche 1 bis 5, dadurch gekennzeichnet, daß der Hebel so montiert ist, daß er durch das Armaturenbrett (16) der Zugmaschine ragt und die Feder (28) zur Innenseite des Armaturenbrettes (16) zieht.

**Revendications**

1. Aménagement de levier comprenant un levier (10) manoeuvrable manuellement et prévu pour être relié à une valve de commande de prise de force du type comportant des moyens d'enclenchement sensibles à la pression du circuit hydraulique, le levier (10) pouvant pivoter sur un pivot (12) entre une position d'enclenchement (10A) et une position de repos à laquelle le levier (10) se déplace lorsque la pression hydraulique amenée à la valve de prise de force associée tombe au-dessous d'une valeur prédéterminée, caractérisé en ce que le levier est, dans sa position de repos, sollicité par un ressort (28) de manière à engager une protubérance (42, 44) dans une cavité (40) pour empêcher son déplacement par inadvertance hors de sa position de repos, l'un des éléments composés de la protubérance et de la cavité étant fixe et l'autre se déplaçant avec le levier, et en ce que le levier (10) est monté de manière à être déplaçable radialement sur son pivot (12) au moyen d'un orifice oblong (26) de sorte que le levier peut pivoter à sa position d'enclenchement (10A) seulement après avoir été tiré radialement sur son pivot (12) contre la sollicitation du ressort afin de dégager la protubérance (42, 44) de la cavité (40); la ligne d'action dudit ressort (28) étant telle que:

(a) le levier (10) est retenu dans sa position d'enclenchement (10A) par une force, exercée par les moyens d'enclenchement sensibles à la pression hydraulique de la valve de prise de force, en opposition à l'action du ressort (28) et

(b) le levier (10) revient automatiquement à sa position de repos, sous l'action du ressort (28), lorsque la force exercée par les moyens d'enclenchement de la valve de prise de force disparaît.

2. Aménagement de levier suivant la revendication 1, caractérisé en ce que le ressort est un ressort de tension (28) dont la ligne d'action est sensiblement radiale lorsque le levier (10) est dans sa position de repos mais qui se déplace pour appliquer un couple au levier (10) lorsque le levier est dans sa position d'enclenchement, tendant à ramener le levier à sa position de repos.

3. Aménagement de levier suivant la revendication 1 ou 2, caractérisé en ce que la cavité est une encoche (40) dans un secteur (36) à bord courbe (38) concentrique à l'axe de pivotement du levier (10) et sur lequel la protubérance (42, 44) se déplace lorsque le levier pivote entre ses deux positions.

4. Aménagement de levier suivant la revendication 3, caractérisé en ce que la protubérance est constituée par un galet (42) exerçant une retenue de frottement négligeable sur le mouvement pivotant du levier (10).

5. Aménagement de levier suivant la revendication 4, caractérisé en ce que le secteur (36) est fixe par rapport au pivot (12) tandis que le galet (42) est monté sur un axe (44) fixé au levier (10).

6. Aménagement de levier suivant l'une quelconque des revendications 1 à 5, caractérisé en ce que le levier est monté de manière à faire saillie à travers le tableau de bord (16) du tracteur et le ressort (28) tire le levier vers l'intérieur du tableau de bord.

FIG.1

FIG.2

0 071 674